# EUROPÄISCHE PATENTSCHRIFT

(11) **EP 3 084 347 B1**
(45) Veröffentlichungstag und Bekanntmachung des Hinweises auf die Patenterteilung: **03.03.2021**
(21) Anmeldenummer: 14812464.7
(22) Anmeldetag: 12.12.2014
(51) Int. Cl.: G01B 11/25

(54) **VERFAHREN ZUR DURCHFÜHRUNG UND KONTROLLE EINES BEARBEITUNGSSCHRITTS AN EINEM WERKSTÜCK**
METHOD FOR CARRYING OUT AND CHECKING A MACHINING STEP ON A WORKPIECE
PROCÉDÉ D'EXÉCUTION ET DE CONTRÔLE D'UNE ÉTAPE D'USINAGE SUR UNE PIÈCE

(30) Priorität: 20.12.2013 DE 102013114707
(43) Veröffentlichungstag der Anmeldung: 26.10.2016
(73) Patentinhaber: EXTEND3D GmbH, 81671 München (DE)
(72) Erfinder: KEITLER, Peter, 81827 München (DE); HEUSER, Nicolas, 80469 München (DE); SCHWERDTFEGER, Björn, 81371 München (DE); RESCH, Christoph, 85748 Garching bei München (DE)
(74) Vertreter: Prinz & Partner mbB
(86) Internationale Anmeldenummer: PCT/EP2014/077634
(87) Internationale Veröffentlichungsnummer: WO 2015/091291

(56) Entgegenhaltungen:
- WO-A2-2012/136345
- US-A1- 2005 121 422
- US-A1- 2008 246 943
- US-A1- 2010 141 946

## Beschreibung

Die Erfindung betrifft ein Verfahren zur Durchführung und Kontrolle eines Bearbeitungsschritts an einem Werkstück.

Aus der WO 2012/136345 A2 sind ein System und ein Verfahren zur visuellen Darstellung von Informationen auf realen Objekten bekannt. Eine Projektionseinheit überträgt grafischen oder bildliche Informationen auf ein Objekt, während eine dynamische Trackingeinrichtung mit einer 3D-Sensorik die Position und/oder Lage des Objekts und/oder der Projektionseinheit im Raum bestimmt und nachverfolgt. Eine Steuereinrichtung passt die Übertragung der Information an die aktuelle, von der Trackingeinrichtung bestimmte Position und/oder Lage des Objekts bzw. der Projektionseinheit entsprechend an. Zur Bestimmung der Pose des Objekts sowie für das Einmessen und/oder die Nachverfolgung der Projektionseinheit und/oder des Objekts können an vorbestimmten Referenzpunkten Marker angebracht werden, deren reflektiertes Licht von der Trackingeinrichtung erfasst wird. Alternativ kann auch Streifenlichtscanning-Prozess durchgeführt werden, bei dem die Projektionseinheit ein Bild projiziert, das mit einer oder mehreren Kameras erfasst und anschließend trianguliert bzw. rekonstruiert wird. Nach einer vorgegebenen Systematik werden Punkte auf dem Objekt gescannt (Scanning), und zur Berechnung der Pose des Objekts wird eine iterative Best-Fit-Strategie benutzt. Je nach Projektionstechnik werden hierbei vollflächig Streifen oder andere Muster (Videoprojektion) oder auch nur einzelne Punkte oder Linien (Laserprojektor) gescannt.

In der EP 2 642 246 A2 ist ein Verfahren beschrieben, mit dem Schablonenmuster (template patterns) passgenau auf ein Werkstück projiziert werden können, beispielsweise im Rahmen der Anleitung eines Monteurs beim Zusammenbaus von Komponenten. Bei diesem Verfahren werden eine oder mehrere präzise kalibrierte Kameras zur direkten Erfassung der Position des von einem Laserprojektor projizierten Spots oder Musters auf der Oberfläche des Werkstücks eingesetzt. Mithilfe von fotogrammetrischen Analysetechniken wird die Position des Projektors relativ zu den Kameras bestimmt. Hierzu ist die Erfassung von Merkmalen auf der Werkstückoberfläche mittels des Laserprojektors vorgesehen, insbesondere unter Zuhilfenahme eines mechanischen Tastkopfes. Anschließend wird auf Basis der berechneten relativen Positionen des Werkstücks und des Projektors ein korrigiertes Schablonenmuster auf das Werkstück projiziert.

Für den Fall, dass die tatsächliche Oberfläche des Werkstücks herstellungsbedingt oder aus anderen Gründen nicht mit der des CAD-Modells des Werkstücks übereinstimmt, das der Steuerung der Projektion zugrundeliegt, schlägt die EP 2 642 247 A2 ein Verfahren vor, mit dem die Laserprojektion entsprechend angepasst werden kann. Hierzu werden auf dem Werkstück Ausrichtungsmerkmale mit einer Prioritätsrangfolge definiert, an denen die Projektion dann ausgerichtet wird.

Neben solchen Projektionssystemen gibt es außerdem reine Messsysteme, mit denen durch optisches und/oder mechanisches Abtasten die geometrische Form sowie Position und Orientierung eines Objekts bestimmt werden können. In der Industrie kommen je nach Objektgröße verschiedene Messaufbauten zum Einsatz. Bei kleinen Objektgrößen werden vermehrt Streifenlichtscanner verwendet, insbesondere mobile Geräte mit integriertem Projektor und integrierter Kamera. Für eine 360°-Digitalisierung kann das Objekt gegebenenfalls auf einem Drehtisch platziert werden. Kleine Objekte können auch in Scan-Kammern erfasst werden, die mit einer Fotogrammetrieeinrichtung bestehend aus mehreren Kameras und Projektoren bzw. einer Kamera und einem Projektor in Verbindung mit einem Drehteller für das Objekt ausgerüstet sind. Der Vorteil einer Kammer sind die optimalen Bedingungen für die Fotogrammetrie (dunkel, keine Einflüsse von Außen). Mittelgroße Objekte werden in der Regel mit Koordinatenmessgeräten vermessen, die typischerweise an einem bestimmten Ort fest installiert sind. Für große Objekte werden Laserscanner eingesetzt, die gegebenenfalls im Rahmen der Vermessung an verschiedenen Stellen aufzustellen sind, um eine ausreichende Erfassung des Objekts aus mehreren Blickwinkeln zu gewährleisten.

All diesen Messtechniken (auch den mobilen) ist gemein, dass sie von ausgebildeten Messtechnikern durchgeführt werden müssen. Zudem müssen bei einigen Verfahren die Werkstücke zur Vermessung an bestimmte Orte gebracht werden, was mit logistischen Schwierigkeiten und erheblicher zeitlicher Verzögerung verbunden ist.

Das auf das Einmessen folgende Matching im Rahmen eines gewünschten Soll-Ist-Vergleiches erfordert in der Regel zwei Stufen: Zunächst wird eine Initialisierung zur Ermittlung einer ungefähren Pose des Werkstücks durchgeführt, bevor dann eine nichtlineare Optimierung erfolgt. Die Initialisierung erfordert manuelle Eingaben in der verwendeten Messtechnik-Software. Je nach Situation müssen ein bis drei markante Merkmale (Kanten, Ebenen, Bohrungen etc.) in der Bildschirmdarstellung z. B. mit der Maus identifiziert werden. Bei der anschließenden nichtlinearen Optimierung, dem sogenannten Einschwimmen, wird die Punktwolke relativ zum CAD-Modell in kleinen Schritten verschoben und gedreht, und es werden jeweils die lotrechten Abstände zur Oberfläche berechnet. Dies geschieht iterativ so lange, bis die Fehlerquadratsumme minimal ist. Für die Optimierung ist eine hinreichend gute Initialisierung notwendig, damit das globale Minimum erreicht werden kann (ansonsten würde der Algorithmus in einem lokalen Minimum enden und das resultierende Matching wäre falsch).

Nach dem Matching wird aus dem Protokoll der Abweichungen zwischen Soll- und Ist-Zustand des Objekts ein Prüfbericht erstellt. Der Prüfbericht wird ausgewertet und gegebenenfalls zur Ergreifung von Gegenmaßnahmen im Falle von zu großen Abweichungen vor Ort herangezogen.

Eine solche "messtechnische" Prüfung von Werkstücken erfolgt aufgrund der geschilderten Komplexität nur sehr selektiv. So werden in Kleinserien nur hochkritische Aspekte überprüft, weniger kritische Aspekte hingegen gar nicht. In der Großserienproduktion wird typischerweise nur stichpunktartig überprüft, z. B. nur jedes 100. Bauteil.

In jedem Fall können durch die verzögerte Verfügbarkeit des Prüfberichts hohe Kosten und Zeitverluste entstehen. Bei der manuellen Montage kann es zu einem Stillstand kommen, wenn aufgrund von Qualitätsproblemen der Weiterbau so lange unterbrochen werden muss, bis der Prüfbericht verfügbar wird und auf dessen Basis die Probleme durch Korrektur bzw. Rückbau gelöst werden können. In der Serienfertigung wird innerhalb der Zeitspanne vom Auftreten des Problems bis zur Verfügbarkeit des Prüfberichts Ausschuss produziert. Somit werden kostbare Personen-/Maschinenkapazitäten unnötigerweise gebunden und Ressourcen verschwendet.

Die US 2005/121422 A1 beschreibt ein Verfahren zum Projizieren eines Lasermusters auf eine Zieloberfläche mit einem Laserprojektor, der relativ zu der Zieloberfläche bewegbar ist. Mit dem Verfahren soll eine lagerichtige (korrigierte) Projektion von Arbeitsanweisungen oder dergl. auf ein Werkstück, dessen Ist-Zustand von einem Soll-Zustand abweicht, erreicht werden. Hierzu wird das Werkstück oder ein relevanter Teil davon gescannt, und nach einem Soll-Ist-Vergleich werden, sofern die Abweichungen innerhalb eines akzeptablen Toleranzbereichs liegen, die Soll-Daten zu Ist-Daten umgewandelt.

Auch die US 2008/246943 A1 offenbart ein Laserprojektionsverfahren. Ein Laserprojektor projiziert einen Laserlichtstrahl auf eine Oberfläche und tastet den Ausgangsstrahl entlang eines Strahlengangs über die Oberfläche ab. Ein Teil des Ausgangslichts wird als Rückkopplungslichtstrahl von der Oberfläche zurück zum Projektor reflektiert. Ein optischer Detektor am Projektor empfängt den Rückkopplungslichtstrahl und wandelt ihn in ein digitales Bild um.

In der US 2010/141946 A1, die ein Verfahren zur Bestimmung der in einem Objekt gestreuten Lichtmenge in einem Maschinensichtsystem betrifft, ist beschrieben, dass zur Erkennung von Defekten von Objekten oder zur Bestimmung des Vorhandenseins und der Position eines auf einem Träger platzierten Objekts oft Sichtsysteme eingesetzt werden. Solche Systeme umfassen eine Kamera oder einen Bildsensor und eine Lichtquelle, um ein zu messendes Objekt mit einfallendem Licht zu beleuchten. Das vom Objekt reflektierte Licht wird von der Kamera erfasst und somit ein Bild des Objekts erzeugt.

Aufgabe der Erfindung ist es, die Effizienz von Bearbeitungsschritten in der Fertigung, Montage und Wartung weiter zu steigern und gleichzeitig die Arbeitsqualität weiter zu erhöhen.

Gelöst wird diese Aufgabe durch ein Verfahren zur Durchführung und Kontrolle eines Bearbeitungsschritts an einem Werkstück mit den Merkmalen des Anspruchs 1. Vorteilhafte und zweckmäßige Ausgestaltungen des erfindungsgemäßen Verfahrens sind in den zugehörigen Unteransprüchen angegeben.

Das erfindungsgemäße Verfahren zur Durchführung und Kontrolle eines Bearbeitungsschritts an einem Werkstück unter Verwendung einer Vorrichtung mit einem Projektor, einer Fotogrammetrieeinrichtung sowie einer Steuereinheit, der die relative Position von Projektor und Fotogrammetrieeinrichtung bekannt ist, umfasst folgende Schritte:
- kontinuierlich wiederholbare Referenzierung zur Bestimmung der Pose des Werkstücks relativ zum Projektor und der Fotogrammetrieeinrichtung in einem vorgegebenen Koordinatensystem;
- Projektion einer Arbeitsanweisung auf das Werkstück;
- Bearbeitung des Werkstücks durch einen Werker; und
- kontinuierlich durchführbare Kontrolle der Bearbeitung durch Scannen wenigstens eines Teilbereichs der Oberfläche des Werkstücks;

Gemäß der Erfindung werden alle Schritte am selben Arbeitsplatz im Rahmen eines integrierten Prozesses und mit Ausnahme des Bearbeitens durch den Werker von der Vorrichtung durchgeführt.

Ein Bearbeitungsschritt im Sinne der Erfindung kann jede Art der Bearbeitung beinhalten, die die äußere Form des Werkstücks verändert, insbesondere eine Montage oder Befestigung eines Bauteils oder ein Materialabtrag. Eine Arbeitsanweisung kann jede für den Werker hilfreiche Information sein, die in Zusammenhang mit dem aktuellen Bearbeitungsschritt steht. Der Begriff "Scannen" beinhaltet im Zusammenhang mit der Erfindung das Überstreichen der Werkstückoberfläche mit Punkten, Linien oder Mustern, welche der Projektor auf das Werkstück projiziert, unter gleichzeitiger Erfassung der Reflexionen von der Werkstückoberfläche durch die Fotogrammetrieeinrichtung.

Die Erfindung beruht auf der Erkenntnis, dass mit einer geeigneten Vorrichtung vorteilhafte Prinzipien der Messtechnik mit vorteilhaften Prinzipien der Projektion so kombiniert werden können, dass alle für eine erfolgreiche Bearbeitung eines Werkstücks erforderlichen Schritte effizient in einem einzigen integrierten Prozess durchgeführt werden können, wobei der Werker durch die Projektion auf das Werkstück bestmöglich unterstützt wird. Da keine verschiedenen Aufbauten bzw. Arbeitsplätze und damit keine räumliche Trennung und zeitlichen Verzögerungen zwischen den einzelnen Schritten notwendig sind, kann die Bearbeitung besonders zeit- und kostensparend durchgeführt werden. Darüber hinaus schafft die erfindungsgemäß vorgesehene automatische optische Kontrolle der Werkstückbearbeitung die Möglichkeit, Fehler zum frühestmöglichen Zeitpunkt zu erkennen und zu korrigieren, sodass die Prozesssicherheit erhöht wird und Ausschuss und damit verbundener unnötiger Aufwand vermieden werden.

Weitere allgemein gültige Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1a eine schematische Darstellung einer Vorrichtung zur Durchführung und Kontrolle eines Bearbeitungsschritts an einem Werkstück gemäß einer ersten Ausführungsform;
- Figur 1b eine schematische Darstellung einer Vorrichtung zur Durchführung und Kontrolle eines Bearbeitungsschritts an einem Werkstück gemäß einer zweiten Ausführungsform; und
- Figur 2 ein beispielhaftes Ablaufdiagramm für das erfindungsgemäße Verfahren.

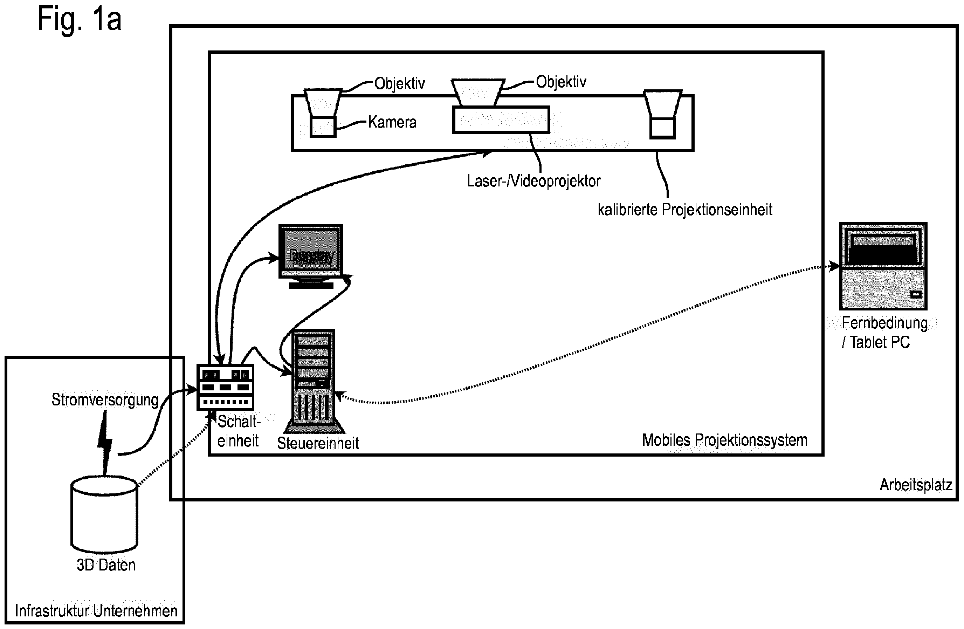

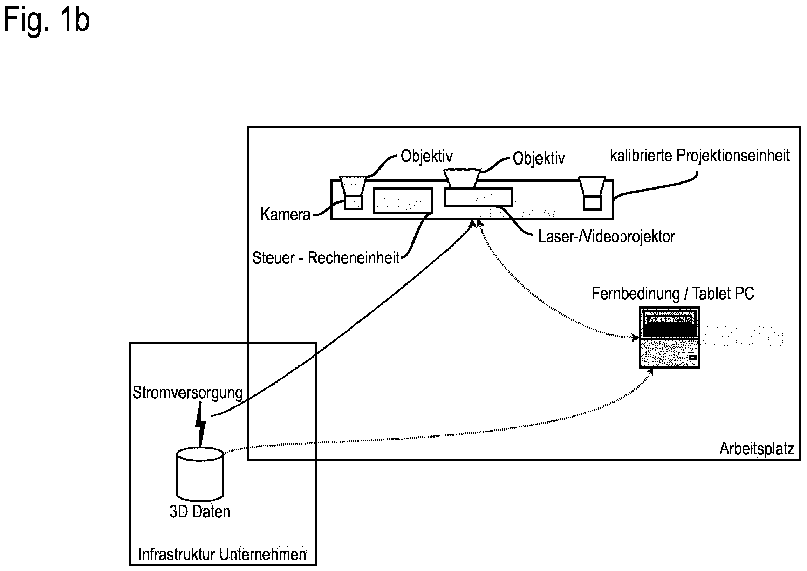

In den Figuren 1a und 1b sind unterschiedliche Ausführungsformen einer Vorrichtung gezeigt, mit der ein Bearbeiter (Werker) in der Lage ist, ein Verfahren zur Durchführung und Kontrolle eines Bearbeitungsschritts an einem Werkstück durchzuführen. Wie später im Detail erläutert wird, können mit dieser Vorrichtung alle notwendigen Schritte in einem einzigen integrierten Prozess, der Messtechnik und Montage zusammenführt, durchgeführt werden: Auf eine weitgehend automatisierte, Referenzierung (die vorzugsweise als dynamische Referenzierung während des Prozesses mehrfach wiederholt wird) folgt optional eine Prüfung, ob am Werkstück überhaupt ein Bearbeitungsschritt notwendig ist, bevor dann nach Aufprojektion einer Arbeitsanweisung auf das Werkstück die händische Bearbeitung des Werkstücks durch den Werker vorgenommen und unmittelbar im Anschluss automatisch geprüft wird, ob der Bearbeitungsschritt korrekt durchgeführt wurde.

Die Vorrichtung umfasst als wesentliche Komponenten einen Projektor (Laserprojektor, Streifenlichtprojektor, Beamer oder dergleichen) und eine Fotogrammetrieeinrichtung mit einer oder mehreren Kameras (hier zwei), deren Pose relativ zum Projektor bekannt ist und während der Durchführung des Verfahrens nicht verändert wird. Als Kamera(s) kommen herkömmliche Industriekameras sowie auch Tiefenkameras (sogenannte Time-of-Flight-Kameras) oder auch andere Tiefensensoren (z. B. Microsoft Kinect) in Betracht. Die Vorrichtung umfasst ferner eine Steuereinheit, die auch zur Auswertung herangezogen wird, und eine optionale Fernbedienung, z. B. in Form eines Tablet PCs, für die Steuereinheit.

Bei der in Figur 1a dargestellten Ausführungsform sind die Kameras und der Projektor in eine mobile Baueinheit integriert. Als Steuereinheit dient hier ein PC mit einem Bildschirm, der über eine Schalteinheit mit dem Projektor und der Fotogrammetrieeinrichtung verbunden ist. Im Unterschied dazu ist bei der in Figur 1b dargestellten Ausführungsform die Steuereinheit in dieselbe mobile Baueinheit integriert wie der Projektor und die Kameras. Die mobile Baueinheit kann beispielsweise auf einem Schwenkarm montiert oder zusammen mit wenigstens einem Teil der restlichen Komponenten der Vorrichtung und einer Verteilerdose auf einem mobilen Rollwagen oder dergleichen platziert sein, sodass nur ein Stromanschluss erforderlich ist. Selbstverständlich kann die Baueinheit aber auch fest an einem Arbeitsplatz montiert sein.

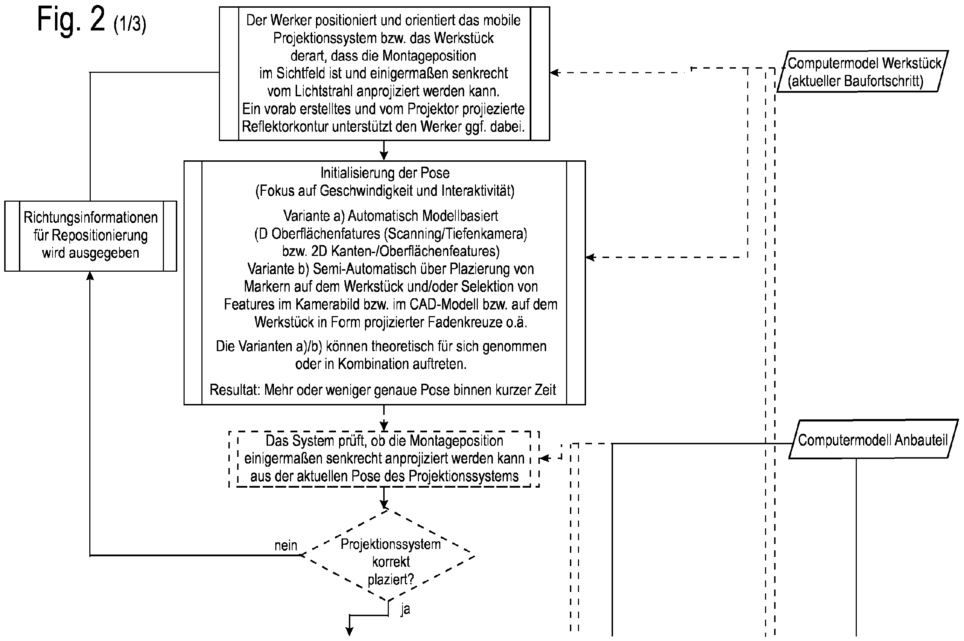

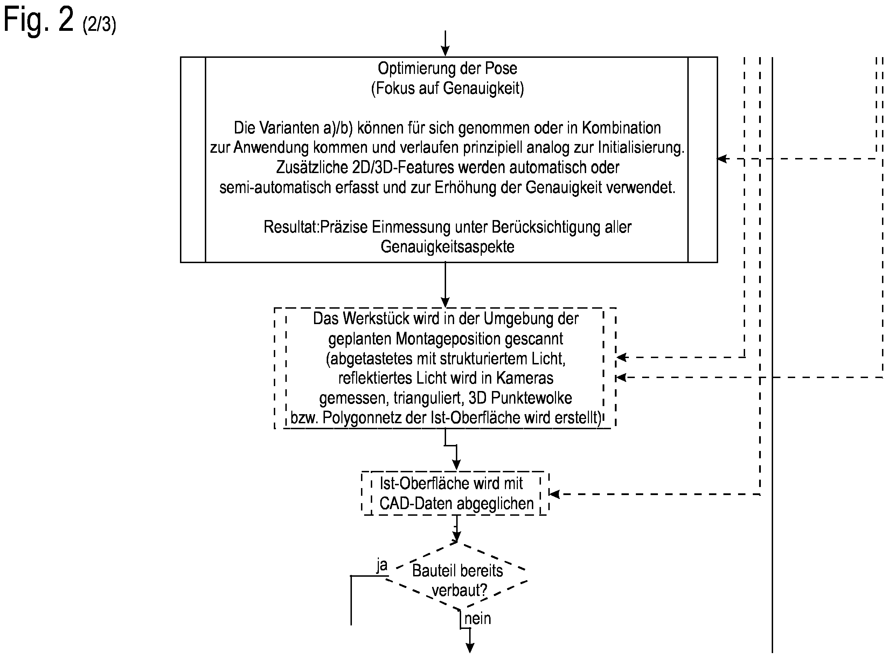

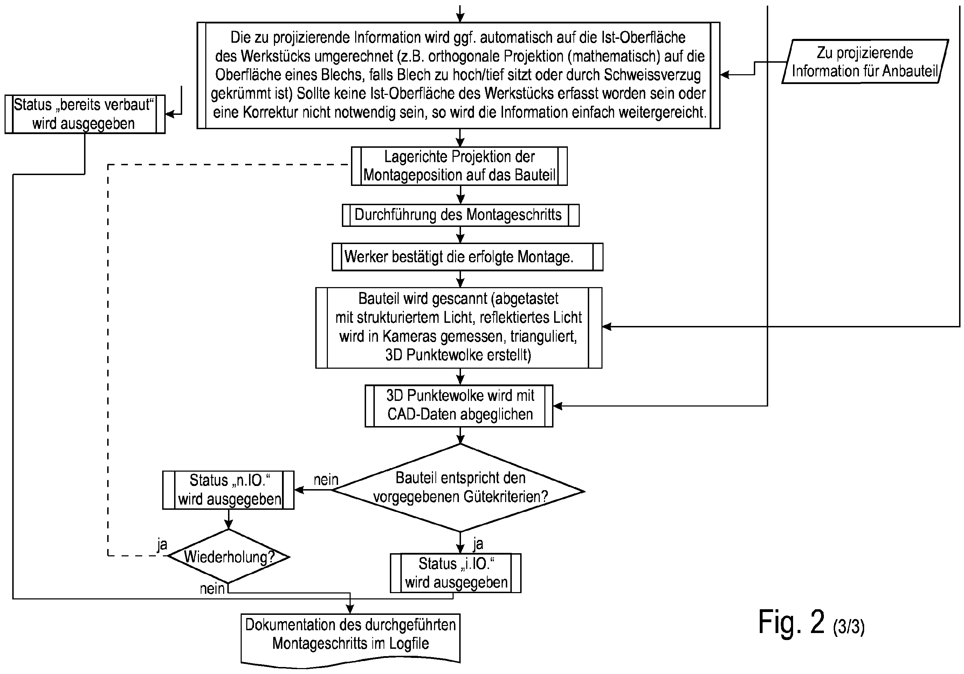

Mithilfe der Vorrichtung wird ein an dem Werkstück auszuführender Bearbeitungsschritt angeleitet und überwacht. Dieser Vorgang wird nachfolgend anhand des Ablaufdiagramms der Figur 2 beispielhaft beschrieben. Das Ablaufdiagramm bildet anhand eines Montagebeispiels einen integrierten Prozess ab, der in Bezug auf die Erfindung alle wesentlichen, aber auch einige optionale Schritte enthält.

So ist im Ablaufdiagramm nicht dargestellt, wie der auszuführende Bearbeitungsschritt vom Werker selektiert wird; vielmehr wird davon ausgegangen, dass dieser vorab bekannt ist. Tatsächlich müssen häufig mehr als ein Bearbeitungsschritt an einem Werkstück nacheinander in einer Sequenz durchgeführt werden. Der Werker kann dann beispielsweise manuell mittels der Fernbedienung von einem zum nächsten Schritt weiterschalten. Ebenfalls ist in Figur 2 nicht dargestellt, wie der richtige Bearbeitungsschritt oder die richtige Sequenz an Bearbeitungsschritten für ein gegebenes Werkstück selektiert wird. Dies kann z. B. ebenfalls manuell über die Fernbedienung aus einer Liste von vorkonfigurierten Sequenzen geschehen.

In einer besonders vorteilhaften Ausprägung des Verfahrens werden codierte Marker, die für die weiter unten im Detail erläuterte (dynamische) Referenzierung ohnehin benötigt werden, bereits in einem vorangehenden Prozessschritt am Werkstück direkt oder auch an einer Aufnahme des Werkstücks, z. B. einem Transportrahmen oder -wagen, etwa in Form von Aufklebern oder Lasersignaturen angebracht. Der Code des oder der Marker ersetzt dabei den klassischen Laufzettel (analog zu einem Barcode). Nun kann der Code des Markers über die Fotogrammetrieeinrichtung automatisch erkannt, darüber das Werkstück identifiziert und der dazu passende Bearbeitungsschritt oder die Sequenz an Bearbeitungsschritten ausgewählt werden. Dadurch wird die Bedienung des Systems weiter vereinfacht, und Eingabefehler werden vermieden.

Im Folgenden wird nun der Ablauf eines einzelnen, selektierten Bearbeitungsschritts beschrieben.

Zunächst werden die Vorrichtung und das zu bearbeitende Werkstück von einem Bearbeiter (Werker) so relativ zueinander platziert, dass der Bereich des Werkstücks, in dem die Bearbeitung stattfinden soll, beispielsweise das Anschweißen eines Halters, im Sichtfeld der Fotogrammetrieeinrichtung liegt und dass der Projektor möglichst senkrecht auf diesen Bereich projizieren kann. Ein vorab erstelltes Schaubild bzw. auch eine vorab erstellte und vom Projektor projizierte Referenzkontur unterstützt den Werker gegebenenfalls dabei.

Vor der Bearbeitung des Werkstücks wird eine Referenzierung durchgeführt, d. h. es wird ein räumlicher Bezug zwischen Werkstück einerseits und Projektor bzw. Fotogrammetrieeinrichtung andererseits hergestellt, der sich in einer Pose (sechs Freiheitsgrade, Position und Orientierung des Projektors relativ zum Werkstück oder andersherum, je nach Sichtweise) ausdrückt. Die Referenzierung gliedert sich vom Prozess her in zwei Phasen: 1) die Initialisierung der Pose und 2) die Optimierung der Pose.

Bei der Initialisierung stehen Geschwindigkeit und Interaktivität im Vordergrund. Ziel ist es, in möglichst kurzer Zeit und unter möglichst weitgehendem Ausschluss von Nutzerinteraktion eine ungefähre Pose zu bestimmen. Somit kann der Werker gegebenenfalls sehr interaktiv angeleitet werden, wie das Werkstück oder die Projektionseinheit zu bewegen sind, damit der nächste Montageschritt durchgeführt werden kann. Bei der Optimierung liegt der Fokus hingegen auf der Genauigkeit. Ganz allgemein gesprochen wird weitere Information akquiriert, die der Steigerung der Genauigkeit zuträglich ist. Zwar könnte sämtliche Information auch in einem einzigen Schritt akquiriert und ausgewertet werden, jedoch wäre dies aus weiter unten geschilderten, praktischen Gründen (Dauer, Grad der Nutzerinteraktion) nachteilhaft.

Figur 2 zeigt die Initialisierung und die Optimierung an festen Stellen im Ablaufdiagramm an. In einer besonders vorteilhaften Ausprägung des Verfahrens jedoch wird die Referenzierung auch zu späteren Zeitpunkten im Ablaufdiagramm kontinuierlich wiederholt im Hinblick auf eine dynamische Referenzierung (nicht in Figur 2 dargestellt). Somit können sowohl die Baueinheit mit dem Projektor und der Fotogrammetrieeinrichtung als auch das Werkstück frei bewegt werden, ohne dass der räumliche Bezug verloren geht. Bei kleinen Bewegungen, insbesondere nach ungewollten Erschütterungen oder Remplern, genügt eine erneute Durchführung der Optimierung der Pose. Bei größeren Bewegungen muss gegebenenfalls auch die Initialisierung erneut ausgeführt werden.

Sollte für die erneute Durchführung der Referenzierung der Projektor benötigt werden (insbesondere für Scanning), so muss hierfür gegebenenfalls die momentan gezeigte Projektion kurz unterbrochen werden. In einer besonders vorteilhaften Ausprägung des Verfahrens kann die gezeigte Projektion zeitlich so eng mit der für das Scanning benötigten Darstellung verschränkt werden, dass die Wahrnehmung des Werkers gar nicht oder nur unwesentlich gestört wird. Beispielsweise kann bei einem Videoprojektor nur jeder x-te Frame für Scanning verwendet werden und alle anderen Frames zur Anzeige der eigentlich gewünschten Projektion. Zu diesem Zweck müssen die Kamera(s) und die Projektionseinheit über ein Trigger-Signal (auch Sync-Signal genannt) miteinander verbunden sein (nicht explizit dargestellt in den Figuren 1a und 1b).

Prinzipiell kann in beiden Phasen (Initialisierung und Optimierung) auf die gleichen Arten von Messungen zurückgegriffen werden (je nach Verfügbarkeit und Bedarf):
- mittels Bildverarbeitung automatisch aus den Kamerabildern extrahierte 2D-Textur-Features (z. B. sogenannte SIFT-Features, SURF-Features, FAST-Corners oder weitere in der Bildverarbeitung verwendete Feature-Deskriptoren) des Werkstücks. Diese können im Falle eines Stereo-Fotogrammetriesystems automatisch durch Triangulation zu 3D-Features weiterverarbeitet werden;
- mittels Bildverarbeitung automatisch aus den Kamerabildern extrahierte 2D-Kanten-Features des Werkstücks. Diese können im Falle eines Stereo-Fotogrammetriesystems automatisch durch Triangulation zu 3D-Kanten-Features weiterverarbeitet werden;
- automatisch akquirierbare 3D-Punktewolke aus einer Tiefenkamera (Time-of-Flight-Kamera) oder einem anderen Tiefensensor;
- automatisch akquirierbare 3D-Punktewolke aus Scanning (siehe oben);
- semi-automatisch akquirierbare 2D-Features im Kamerabild (3D im Falle eines Stereo-Fotogrammetriesystems). Der Werker selektiert markante Punkte im Kamerabild die vorab von der Bildverarbeitung aufgrund bestimmter Kriterien ausgewählt wurden;
- semi-automatisch akquirierbare 2D-Features durch Markerplatzierung auf dem Werkstück (3D im Falle eines Stereo-Fotogrammetriesystems). Der Werker platziert Marker auf dem Werkstück, die anschließend automatisch vom System erkannt werden;
- semi-automatisch akquirierbare 2D-Features durch Aufprojektion von Fadenkreuzen (oder äquivalente Projektion) auf bestimmte Stellen des Werkstücks. Der Werker verschiebt mittels Steuerung/Fernbedienung ein projiziertes Fadenkreuz bis es mit einem vordefinierten Punkt auf dem Werkstück in Deckung kommt.

Idealerweise wird nun die Initialisierung nur unter Zuhilfenahme von automatisch akquirierbaren Features bewerkstelligt. Mit einem Videoprojektor kann sehr schnell (da vollflächig) gescannt werden. Auch bei Verfügbarkeit einer Tiefenkamera stehen schnell und vollflächig viele Features zur Verfügung. Ist die Struktur des Werkstücks "gutmütig" (nicht zu viele und nicht zu wenige Konturen, keine Symmetrien), so kann eine automatische Initialisierung durch Abgleich mit dem Computermodell gelingen (modellbasierter Ansatz). In abgeschwächter Form gilt dies sogar unter Zuhilfenahme von reiner Bildverarbeitung, wofür das Objekt jedoch noch "gutmütiger" geartet sein muss.

Eine vollautomatische Initialisierung kann jedoch fehlschlagen, entweder wegen mangelnder Gutmütigkeit des Werkstücks oder aufgrund des zeitlichen Aufwands, etwa im Falle der Verwendung einer Laser-Projektionseinheit, welche nur Punkte oder Linien projizieren kann. In diesem Fall kann auf eine möglichst kleine Anzahl an zusätzlichen, semi-automatisch akquirierten Features zurückgegriffen werden. Zum Beispiel werden dann für die Referenzierung am Werkstück an bestimmten Stellen Marker angebracht.

In einer besonders vorteilhaften Ausprägung des Verfahrens kann die wiederholte semi-automatische Anbringung von Markern dadurch umgangen werden, dass eine zum Zeitpunkt der Anwendung des beschriebenen Verfahrens mit dem Werkstück fest verbundene Transport- oder Haltevorrichtung zur Initialisierung verwendet wird. Häufig werden Werkstücke beispielsweise in Rahmen eingespannt oder auf Rollwagen bewegt und sind temporär über genau definierte Aufnahmepunkte mit dieser Vorrichtung verbunden, sodass der räumliche Bezug von Werkstück und Transport- oder Haltevorrichtung zumindest einigermaßen genau gegeben ist. Werden nun die Marker direkt an der wiederverwendbaren Transport- oder Haltevorrichtung angebracht, so kann der gesuchte direkte Bezug von Projektionssystem und Werkstück über den Bezug vom Projektionssystem zur Transport- oder Haltevorrichtung und Transport- oder Haltevorrichtung zum Werkstück automatisch hergestellt werden. Ist die Transport- oder Haltevorrichtung präzise und verwindungssteif genug gefertigt, entfällt somit gegebenenfalls sogar die (im Folgenden beschriebene) Optimierungsphase.

Nach erfolgter Initialisierung kann die Optimierung der Pose durchgeführt werden. Sollte das Objekt während der Initialisierung bereits flächig durch Scanning oder Tiefenkamera erfasst worden sein, so genügt es unter Umständen, diese Daten weiterzuverwenden. Ansonsten ist es nun sehr einfach, weitere Daten zu akquirieren, da die ungefähre Pose bereits bekannt ist. Die Zuordnung weiterer 2D/3D-Features aus der Bildverarbeitung zu entsprechenden Stellen im Computermodell ist deutlich vereinfacht, da der Suchraum nun viel kleiner ist. Auch kann nun unter Verwendung eines Laser-Projektors gezielt und damit schnell an bestimmten Stellen gescannt werden. Auch das Akquirieren weiterer, semiautomatischer Features ist nun einfacher. Da die Pose ungefähr bekannt ist, können unterstützende Informationen bereits ungefähr an der richtigen Stelle auf das Objekt projiziert werden. Somit kann dem Werker z. B. einfach angezeigt werden, in welchen Bohrungen gegebenenfalls weitere Marker zu platzieren sind.

Auf diesem Wege wird zunächst soviel Information gesammelt, wie für die finale Berechnung der Pose mit der geforderten Genauigkeit vonnöten ist. Wie bei der Initialisierung wird, soweit möglich und sinnvoll, auf automatische Verfahren gesetzt; semi-automatische Verfahren kommen ergänzend hinzu, falls nötig. Es folgt nun das Matching, d. h. die bestmögliche Ausrichtung (Einschwimmen) der 2D/3D-Features mit dem im Rechner hinterlegten Computer-Modell (CAD-Modell, Polygonmodell (Mesh) oder dergleichen). Dabei wird eine iterative Best-Fit-Strategie verfolgt. Implizit wird dabei eine Pose der Punktwolke zum Computer-Modell berechnet. Da gleichzeitig auch die 3D-Positionen der Punktwolke im Projektionssystem bekannt sind, kann somit ein direkter räumlicher Bezug vom Computer-Modell bzw. von der Punktwolke zum Projektionssystem hergestellt werden.

Für die Optimierung der Pose mittels einer iterativen Best-Fit-Strategie kommen insbesondere folgende Techniken in Betracht.
- Referenzpunktsystematik (RPS): Die Einmessung erfolgt vornehmlich nur über besondere Passpunkte am Werkstück, die aufgrund des Fertigungsprozesses im jeweiligen Fertigungsschritt als besonders genau bekannt gelten und deshalb als Referenz angesehen werden. Diese Bereiche werden gezielt über eine der oben beschriebenen Verfahren in Form von 2D/3D-Features erfasst. Gemäß der sogenannten 3-2-1-Regel werden eine Primär-, eine Sekundär- und eine Tertiärebene definiert, wobei die Primärebene durch drei, die Sekundärebene durch zwei und die Tertiärebene durch einen Punkt definiert sind. Die entstehenden Flächen sollten idealerweise senkrecht zueinander stehen. Diese Technik ist im Automobilbau etabliert, wobei die RPS-Punkte für den späteren Zusammenbau von Zuliefer- bzw. Einzelteilen notwendig sind. Anstelle von Punkten werden auch Langlöcher oder Flächen verwendet. Das Ergebnis der Optimierung ist eine heterogene dreidimensionale Punktewolke mit Häufungen an den relevanten Referenzpositionen, die iterativ solange positioniert/orientiert wurde, bis die Summe der quadratischen Abstände zum Computer-Modell minimal wurde. Somit werden Bautoleranzen lokal, d. h. relativ zu den verwendeten Referenzbezügen, klein gehalten und bestmöglich auf diese verteilt. Die Strategie, möglichst kleine Toleranzen zu erzeugen und diese lokal und relativ zu in der näheren Umgebung befindlichen Referenzbezügen zu verteilen, ist insbesondere dann sehr sinnvoll, wenn die Genauigkeit der Positionierung von Anbauteilen relativ zu diesen Bezügen gefordert ist, etwa weil ein Anbauteil exakt zwischen zwei bereits montierte Anbauteile eingefügt werden soll und der globale Bezug nicht wirklich relevant ist. Diese Vorgehensweise ist äquivalent zur Verwendung von Schablonen, die über eine sogenannte "Anschlaggeometrie" verfügen, welche es dem Werker ermöglicht, die Schablone lokal und relativ zu bereits existierenden Punkten, Ebenen oder Kanten des Werkstücks eindeutig an das Werkstück anzulegen.
- Globaler Best-Fit: Das Werkstück wird gescannt und dabei flächig dicht in Form von 2D/3D-Features erfasst (Videoprojektor), oder es wird zumindest eine große Zahl von 3D-Punkten auf der Oberfläche des Werkstücks erfasst (Laserprojektor). In beiden Fällen ist die Gesamtanzahl korrespondierender Punkte (Marker + Scanpunkte) deutlich erhöht. Das Ergebnis der Optimierung ist die Pose einer annähernd gleichverteilten dreidimensionale Punktwolke, die iterativ solange positioniert/orientiert wurde, bis die Summe der quadratischen Abstände zum Computer-Modell minimal wurde. Somit werden auch hier Bautoleranzen klein gehalten und möglichst global, d. h. im Bereich der gescannten Punktwolke verteilt. Die Strategie, möglichst kleine Toleranzen zu erzeugen und diese global möglichst gleichmäßig zu verteilen, ist insbesondere dann sehr sinnvoll, wenn das zu fertigende Werkstück in sich abgeschlossen ist und/oder kein höherer Kontext mehr existiert (Beispiel: CNC-Frästeil mit über der Oberfläche verteilt konstanter Genauigkeitsausprägung, an welches Anbauteile montiert werden sollen).

Eine Erleichterung für den Werker bei der Platzierung der Marker kann durch ein sogenanntes "Seat-Bucket-Alignment" erreicht werden, bei dem die Zuordnung der beim Einmessen detektierten 3D-Punkten zu den entsprechenden Merkmalen im Computer-Modell automatisch erfolgt. Hierzu werden mögliche Steckpositionen für die Marker bzw. deren Adapter im Computer-Modell vorab algorithmisch (d. h. automatisch) ermittelt. Die manuelle Zuordnung von Merkmalen im Computer-Modell zu den entsprechenden Markern entfällt dann im Idealfall vollständig. Für diese Art der Zuordnung können uncodierte Marker verwendet werden, die ohne Berücksichtigung der Reihenfolge in beliebige vorhandene Bohrungen auf dem Werkstück platziert werden, ohne dass eine 1-zu-1-Zuordnung zu vorab festgelegten Bohrungen eingehalten werden muss. Dadurch wird die Vorbereitungszeit reduziert, da Planung der Referenzierung im Computer-Modell vereinfacht wird. Außerdem wird die Setup-Zeit des Systems reduziert, da keine falsche Platzierung mehr möglich ist und keine Rücksicht auf Marker-IDs mehr genommen werden muss. Solche uncodierten Marker nehmen aufgrund der fehlenden Code-Information einen kleineren Bereich ein und können somit deutlich handlicher konstruiert und gefertigt werden.

Um die Referenzierung robuster und schneller zu machen, kann unter entsprechenden Voraussetzungen auf eine "Sensor-Fusion" zurückgegriffen werden, wie nachfolgend erläutert wird. Es existieren verschiedene optische Merkmale, die für die Referenzierung potentiell zur Verfügung stehen. Dazu gehören Textur-Features sowie besondere Geometrie-Merkmale wie geradlinige oder kurvenförmige Kanten, Ecken und Flächen, die von der Fotogrammetrieeinrichtung zunächst in 2D in jedem Kamerabild einzeln erfasst werden können und im Falle eines Stereo-Kamera-Systems mittels Triangulation unmittelbar zu 3D Features weiterverarbeitet werden können. Darüber hinaus können Geometrie-Merkmale wie Kanten, Ecken und Flächen, unmittelbar in 3D erfasst werden, z. B. mit einer Time-of-Flight-Kamera, einem Projektor-Fotogrammetrie-System (Scanning) oder einem Projektor-Stereo-Kamera-System (Scanning). Die zuvor erwähnten Marker, z. B. Kreismarker aus der klassischen Messtechnik, können entweder durch 2D-Messungen in einem Kamerabild oder 3D-Messungen, z. B. mit einem Stereo-Kamera-System erfasst werden. Durch geschickte Fusion all dieser Merkmale, soweit vorhanden, kann Folgendes erreicht werden:
- Weniger oder gar keine Marker sind für die Referenzierung notwendig durch unterstützende Wirkung anderer Merkmale.
- Weniger Marker sind bei gleicher Genauigkeit notwendig, weil z. B. Ebenen nicht mehr messtechnisch präzise über 3 Marker kenntlich gemacht werden müssten, sondern initial nur noch ungefähr über 1 Marker. Analog steigt bei gleicher Markeranzahl die Genauigkeit.
- Ein Ad-hoc-Training von markerlosen Trackingverfahren an einem fotogrammetrisch vermessenen Referenzobjekt ohne Notwendigkeit von CAD-Daten ist möglich.
- Der Scan-Aufwand wird minimiert durch eine Vorabfilterung in der Bildverarbeitung. Dadurch lässt sich die Startpose (Initialisierung) einfacher gewinnen. Die Bereiche, in denen die Bildverarbeitung zuverlässige Ergebnisse liefert (auf Basis von 2D-Merkmalen oder triangulierten 3D-Merkmalen), müssen nicht mehr gescannt werden. Dies ist insbesondere bei der Verwendung eines Laserprojektors von Vorteil, weil das flächige Scannen mit einem Laser relativ viel Zeit benötigt.

Die Bedeutung der Sensor-Fusion soll anhand der folgenden Überlegungen weiter verdeutlicht werden. Normalerweise kann ein Werkstück über drei 3D-Punkt-Marker, die im Sichtbereich der Kamera(s) gut verteilt sind, eindeutig und präzise referenziert werden. Drei ist also die mathematische Minimalanzahl von Markern zur Lösung des Problems. Eine weiträumige Verteilung der Marker ist wegen der geforderten Genauigkeit notwendig. Es ist ein messtechnisches Grundprinzip, die Referenzen gut über den gesamten Messbereich zu verteilen. Ein einzelner Quadratmarker, dessen Position und Lage zum Werkstück bekannt sind, stellt über seine 4 Eckpunkte zwar mehr als das mathematische Minimum an Information zur Verfügung. Dennoch werden wegen des erwähnten Verteilungsprinzips mindestens drei sichtbare Quadratmarken gefordert. Wenn keine eindeutig identifizierbaren Punkte verfügbar sind, kann man sich mit der Markierung von Ebenen behelfen. Drei bekannte Ebenen definieren ebenfalls eindeutig die Position und Lage des Werkstücks im Raum (Punkte und Ebenen sind mathematisch dual zueinander). Um eine Ebene eindeutig zu identifizieren, sind drei Punkte notwendig. Drei derart markierte Ebenen (insgesamt also neun Marker) auf dem Werkstück sind also ebenfalls möglich. Alternativ können nach der RPS-Systematik sechs Punkte auf drei Ebenen verwendet werden, um Position und Lage eindeutig festzulegen. Generell können unterschiedliche Kombinationen aus geometrischen Punkt-, Gerade- und Ebene-Features verwendet werden, um Position und Lage eines Werkstücks eindeutig und präzise festzulegen:
- sechs Punkte auf drei Ebenen (RPS-Systematik), d. h. sechs Platzierungen von Ebenen-Adaptern;
- zwei Geraden (oder wahlweise zwei größere Kreise), d. h. vier Platzierungen von Kanten-Adaptern;
- ein Achsen- und ein Punkt-Korrespondenz, d. h. drei Platzierungen, ein Punkt-/zwei Kantenadapter;
- drei Punkte (oder wahlweise drei Ebenen), d. h. drei Punktadapter bzw. neun Ebenenadapter;
- zwei Ebenen und ein Punkt (oder wahlweise 1 Ebene und 2 Punkte), d. h. sechs Ebenen- und ein Punktadapter (oder wahlweise drei Ebenen- und zwei Punktadapter).

Wenn nun die oben geschilderten Maßnahmen zur Optimierung der Pose eingesetzt werden, so kann der Einsatz von Markern auf die Initialisierung beschränkt werden. Die Anforderung an die Genauigkeit entfällt, lediglich Robustheit ist weiterhin notwendig. Es kann also über weniger Marker initialisiert werden, z. B.:
- ein Flachmarker (oder eine sogenannte "virtuelle Lehre", wie etwa ein Schlosserwinkel mit darauf angeordneten Markern), grob in eine Ecke geschoben. Die Optimierung erfolgt dann beispielsweise über die Detektion der Kanten im Kamerabild oder in der gescannten Punktwolke.
- drei Ebenenadapter zur Markierung von drei Ebenen. Die Optimierung erfolgt beispielsweise über Projektion und 3D-Rekonstruktuion von großen Kreisen um die Ebenenadapter herum. In anderen Worten: Jede der drei Ebenen wird zunächst grob über die kleine Kreismarke rekonstruiert (hoher Winkelfehler durch kleinen Radius) und dann durch einen großen Kreis stabilisiert. Dies bietet sich an für einen Laserprojektor, weil ganz gezielt gescannt wird.
- Alternative: Flächiger Scan-Vorgang und Rekonstruktion aller Ebenen in der Punktwolke, besonders geeignet für Videoprojektion.

In allen Fällen kann auch gezielt nach den sechs RPS-Aufnahmen gescannt werden.

Im Ergebnis kann die Minimalanzahl der Markeradapter von bisher drei bis neun auf ein bis drei gesenkt werden. Im Extremfall kann auf Marker komplett verzichtet werden, falls
- ein flächiger Scan möglich ist und die aus der Punktwolke rekonstruierte Geometrie unter Zuhilfenahme eines modellbasierten markerlosen Ansatzes eindeutig dem Bauteil zugeordnet werden kann (keine Symmetrien, keine Wiederholungen);
- der modellbasierte Trackingansatz alleine robust funktioniert auch ohne Scanning (keine Symmetrien, keine Wiederholungen, darüber hinaus noch strengere Anforderungen an Klarheit der Geometrie, d. h. nicht zu viele und nicht zu wenige Textur-Merkmale bzw. Geometrie-Merkmale auf der Oberfläche, sowie günstige Beleuchtungsbedingungen);
- die Initialisierung gewährleistet wird, durch: 1) Projektion eines Umrisses (oder auch Markierungen wie etwa Fadenkreuze auf markanten Punkten etc.) und dadurch 2) angeleitetes manuelles Aufstellen des Projektors derart, dass der projizierte Umriss ungefähr mit dem physischen Werkstück in Deckung gebracht wird.

Die Kombination von Scanning, markerlosen Verfahren der Bildverarbeitung sowie Tiefenkameras bzw. Tiefensensoren erhöht sozusagen die Robustheit.

Unabhängig von der verwendeten Einmessmethode ist gemäß einem besonderen Aspekt beim Matching vorgesehen, dass nur ein als verlässlich angesehener Teilbereich der Oberfläche des Werkstücks berücksichtigt wird. Ein solcher Teilbereich beinhaltet vorzugsweise Referenzpunkte (RPS-Systematik) oder andere signifikante Merkmale des Werkstücks, die als besonders genau bekannt bzw. präzise gefertigt gelten. Der Teilbereich muss nicht den zu bearbeitenden Bereich des Werkstücks umfassen. Situationsbedingt könnte ein Einschwimmen auf einen noch zu verändernden Bereich sogar kontraproduktiv sein. Der Teilbereich kann selbstverständlich aus mehr als einem zusammenhängenden Abschnitt der Oberfläche bestehen.

Die Steuereinheit prüft nach der erfolgreichen Referenzierung, unter Verwendung der aus der Referenzierung bestimmten Pose des Projektors, ob der Bereich des Werkstücks, in dem die Bearbeitung stattfinden soll (nachfolgend der Einfachheit halber als Montageposition bezeichnet), sichtbar (d. h. nicht durch andere Teile des Werkstücks verdeckt) ist und innerhalb eines vorgegebenen Winkelbereichs (möglichst senkrecht) anprojiziert werden kann. Besonders hilfreich ist es, diese Prüfung (wie in Figur 2 gezeigt) direkt nach der Initialisierung durchzuführen, um dem Werker gegebenenfalls möglichst schnell und interaktiv eine Information zur Korrektur der Positionierung des Projektors bzw. des Werkstücks anzeigen zu können. Alternativ ist dieser Schritt auch nach der Optimierung der Pose denkbar.

Jedenfalls wird in einer besonders vorteilhaften Ausprägung des Verfahrens nach erfolgter Optimierung der Pose sowie Prüfung der Korrektheit der Pose des Projektors das Werkstück in dem Bereich der Montageposition erneut gescannt. Je nach Projektortyp wird dort die Oberfläche des Werkstücks mit strukturiertem Licht oder einem Laserstrahl abgetastet, wobei das reflektierte Licht von der Fotogrammetrieeinrichtung erfasst wird. Mittels Triangulation wird aus den Messergebnissen eine dreidimensionale Ist-Punktwolke erstellt, und es wird ein Ist-Oberflächenmodell (Polygonnetz) des Werkstücks im Bereich der Montageposition berechnet.

Zunächst kann auf Basis dieses Oberflächenmodells durch Abgleich mit dem Soll-Zustand (Computer-Modell) des zu verbauenden Anbauteils (hier der zu montierende Halter) in einem optionalen Verfahrensschritt geprüft werden, ob das Anbauteil - bewusst oder unbewusst - bereits früher richtig montiert wurde. Dies ist überall dort besonders hilfreich, wo Revisionsstände der Konstruktionsdaten sich häufig ändern und deshalb "veraltete" Werkstücke auf einen aktuellen Revisionsstand gebracht werden müssen, wie etwa in der Frühphase der Produktentwicklung, insbesondere im Prototypenbau. Entsprechendes gilt, wenn der Bearbeitungsschritt das Abtragen von Material vorsieht und durch das Scannen erkannt wurde, dass gar kein (weiterer) Abtrag erforderlich ist. In diesen Fällen gibt die Steuereinheit einen Hinweis aus, dass der ursprünglich an dieser Stelle vorgesehene Bearbeitungsschritt nicht mehr erforderlich ist, sodass der nächste Bearbeitungsschritt in Angriff genommen werden kann.

Falls die Überprüfung der Notwendigkeit des Bearbeitungsschritts zu einem positiven Ergebnis gekommen ist oder wenn eine solche Überprüfung gar nicht vorgesehen ist, wird zur Unterstützung des Werkers, der den Bearbeitungsschritt durchführen soll, nun eine Arbeitsanweisung (eine bestimmte Information, die in Zusammenhang mit dem Bearbeitungsschritt steht), auf das zu bearbeitende Werkstück projiziert.

Hervorzuheben ist hier, dass die Arbeitsanweisung vor der eigentlichen Projektion angepasst wird an den erfassten Ist-Zustand des Werkstücks, d. h. die zu projizierende Montageposition (Kontur) wird automatisch auf die Ist-Oberfläche des Werkstücks umgerechnet. Dies soll anhand des nachfolgenden Beispielszenarios verdeutlicht werden.

Im Lokomotivenbau wird das Projektionssystem über verlässliche Bohrungen, Kanten oder Ebenen (im Folgenden als Passpunkte bezeichnet) auf dem Unterboden zur Lok eingemessen. Die gewählten Passpunkte stimmen hinreichend genau mit dem Computer-Modell überein, d. h. die Lage des Blechteils ist an sich korrekt. Zwischen den verlässlichen Passpunkten ergeben sich jedoch größere Abweichungen zum Computer-Modell. Wenn nun vom Projektor die Position eines anzubringenden Halters auf das Blech projiziert werden soll und das Blech z. B. aufgrund von Toleranzen in der Fügetechnik an der anzuprojizierenden Halterposition weiter oder weniger weit vom Projektor entfernt ist, als es das Computer-Modell vermuten ließe, dann entspricht die Projektionsfläche nicht dem geplanten Zustand. Dies ist typischerweise unproblematisch, solange genau senkrecht auf das Blech projiziert wird, da in diesem Fall die gewünschte Halterposition (2D-Koordinaten auf der Oberfläche) trotzdem getroffen wird. Erfolgt die Projektion jedoch unter einem Winkel (schräg) auf das Blech, so ist die Projektion gegenüber der gewünschten Position verschoben. Oftmals ist die Ursache der Abweichung vom Planungs-Soll der sogenannte "Schweißverzug": Ein anfangs ebenes Blech wird durch Schweißvorgänge (thermische Einwirkung) lokal verformt, insbesondere verbogen oder gewellt. Dieser Effekt kann derzeit mit vertretbarem Aufwand nicht vollständig eliminiert werden. Durch das Scannen des Werkstücks wird die Abweichung jedoch unmittelbar vor der Durchführung des Montageschrittes erfasst, und die Projektion kann durch eine Umrechnung der Soll-Position des zu montierenden Halters lotrecht auf die Ist-Lage so angepasst werden, dass die Arbeitsanweisung lagerichtig projiziert wird. Diese Maßnahme beugt möglichen Fehlern bei der Bearbeitung des Werkstücks vor bzw. vermeidet Verwirrung beim Werker aufgrund einer nicht korrekten Projektion.

Als weitere Besonderheit wird während der Projektion durch Scannen geprüft, ob die Projektion der Arbeitsanweisung tatsächlich auf der gewünschten Oberfläche landet oder ob eine Verdeckung vorliegt. Eine Verdeckung kann z. B. dadurch begründet sein, dass das Computer-Modell des Werkstücks nur unvollständig vorliegt und deshalb ein störendes Teil nicht vor der Projektion programmatisch schon erkannt wurde. Auf eine Verdeckung wird geschlossen, wenn die erwarteten Lichtpunkte der Projektion an einer anderen Stelle im aufgenommenen Bild der Fotogrammetrieeinrichtung erscheinen oder gar nicht auffindbar sind. Die Steuereinheit kann den Werker dann zu einer Umpositionierung des Projektors auffordern.

Wenn alle Voraussetzungen für eine lagerichtige Projektion erfüllt sind, kann der Werker den Bearbeitungsschritt, hier das Anschweißen eines Halters, durchführen. Anschließend bestätigt er der Steuereinheit manuell die erfolgte Durchführung oder das System erkennt die Durchführung automatisch im Rahmen der in jedem Fall stattfindenden Kontrolle, die nachfolgend beschrieben wird.

Der Bearbeitungsschritt wird von der Vorrichtung im Rahmen eines Soll-Ist-Vergleichs kontrolliert. Das Werkstück wird dazu auf die gleiche Weise wie zuvor erneut gescannt, vorzugsweise wieder nur im Bereich der Montageposition oder allgemein alle Bereiche, an denen im Rahmen des Bearbeitungsschritts Veränderungen am Werkstück vorgenommen wurden. Die resultierende dreidimensionale Punktwolke wird mit den Daten aus dem Computer-Modell abgeglichen, die den Soll-Zustand nach dem Bearbeitungsschritt repräsentieren.

Im Rahmen der Auswertung durch die Steuereinheit wird gemäß einem auf den konkreten Bearbeitungsschritt abgestimmten Algorithmus aus den Abweichungen zwischen dem Soll- und dem Ist-Zustand darauf geschlossen, ob der Bearbeitungsschritt vollständig und korrekt durchgeführt wurde oder nicht. So wird gemäß dem Ausführungsbeispiel sofort erkannt, ob der Halter tatsächlich an die richtige Stelle mit der richtigen Ausrichtung gesetzt wurde.

Entspricht das Werkstück nach der Bearbeitung den von der Steuereinheit vorgegebenen Gütekriterien, wird dies dem Werker automatisch mitgeteilt, und es erfolgt eine Dokumentation des erfolgreich durchgeführten Bearbeitungsschritts, vorzugsweise einschließlich eines Nachweises, z. B. in Form eines Logfiles, Fotos oder dergleichen.

Wenn jedoch Abweichungen des Ist-Zustands vom Soll-Zustand erkannt werden, die so groß sind, dass von einem Qualitätsmangel oder einem Bearbeitungsfehler ausgegangen werden muss, wird der Vergleich als fehlerhaft beurteilt, und es wird sofort ein Warnhinweis ausgegeben. Der Hinweis kann nur in einer Warnung (akustisch und/oder optisch) bestehen. Es kann aber auch eine genauere Fehlerinformation bzw. -beschreibung projiziert und/oder (alternativ oder zusätzlich) auf einem anderen Ausgabegerät, wie etwa dem Bildschirm der Steuereinheit oder dem Tablet-PC, ausgegeben werden. Wenn der Bearbeitungsschritt beispielsweise einen Materialabtrag (Schleifen etc.) vorsah, kann die Abweichung vom Sollzustand, insbesondere ein noch vorhandener Überstand, durch die Vorrichtung kenntlich gemacht werden.

Der Werker führt dann in der Regel eine Nachbearbeitung oder Korrektur durch und bestätigt der Steuerung deren Abschluss. Daraufhin wird der Soll-Ist-Vergleich wie oben beschrieben erneut durchgeführt.

Zusätzlich zu den oben beschriebenen Ergebnissen "Erfolgreich geprüft" und "Fehlerhaft" kann der Algorithmus weitere Ergebnisse vorsehen, wie etwa "Unbekannt", "Noch nicht montiert" und/oder "Noch nicht geprüft".

In jedem Fall erhält der Werker also sofort eine Rückmeldung über den Erfolg bzw. die Qualität der soeben durchgeführten Bearbeitung.

Im Falle einer größeren Variantenvielfalt, z. B. bei einer Vielzahl verschiedener Haltertypen im Flugzeugbau, kann unter Umständen eine korrekte Erkennung des richtigen Haltertyps durch das Scannen nicht ohne Weiteres garantiert werden. Dennoch sieht das Verfahren wenigstens die Durchführung einer Plausibilitätsprüfung vor, bei der die gescannte Punktwolke mit der zu erwartenden Geometrie nach der Bearbeitung verglichen wird.

In einer besonders vorteilhaften Ausführung des Verfahrens wird die korrekte Durchführung des Bearbeitungsschritts (oder gegebenenfalls zumindest die korrekte Platzierung eines Anbauteils) von der Vorrichtung kontinuierlich geprüft. Dies ist insbesondere sinnvoll wenn die gezeigte Projektion zeitlich so eng mit der für das Scanning benötigten Darstellung verschränkt wird, dass die Wahrnehmung des Werkers durch die via Scanning realisierte automatische Erkennung der korrekten Durchführung nicht oder nur unwesentlich beeinträchtigt wird. Beispielsweise kann somit die Kontur/Auflagefläche eines Halters initial in rot angezeigt werden und auf grün umgeschaltet werden, sobald der Halter korrekt platziert wurde. Bei versehentlichem Verrutschen würde die Projektion wieder auf rot umgeschaltet werden. Somit hat der Werker ein unmittelbares Feedback bereits während der Durchführung und nicht erst danach. Im konkreten Beispiel kann der Halter also korrekt platziert werden, bevor die endgültige Fixierung durch Punktschweißen oder andere Fügetechniken tatsächlich umgesetzt wird.

## Patentansprüche

1. Verfahren zur Durchführung und Kontrolle eines Bearbeitungsschritts an einem Werkstück, unter Verwendung einer Vorrichtung mit einem Projektor, einer Fotogrammetrieeinrichtung sowie einer Steuereinheit, der die relative Position von Projektor und Fotogrammetrieeinrichtung bekannt ist, wobei das Verfahren folgende Schritte umfasst:
- kontinuierlich wiederholbare Referenzierung zur Bestimmung der Pose des Werkstücks relativ zum Projektor und der Fotogrammetrieeinrichtung in einem vorgegebenen Koordinatensystem;
- Projektion einer Arbeitsanweisung auf das Werkstück;
- Bearbeitung des Werkstücks, bei der die äußere Form des Werkstücks verändert wird, durch einen Werker, wobei der Bearbeitungsschritt in Zusammenhang mit der Arbeitsanweisung steht; und
- kontinuierlich durchführbare Kontrolle der Bearbeitung durch Scannen wenigstens eines Teilbereichs der Oberfläche des Werkstücks;
wobei alle Schritte am selben Arbeitsplatz im Rahmen eines integrierten Prozesses und mit Ausnahme des Bearbeitens durch den Werker von der Vorrichtung durchgeführt werden.

2. Verfahren nach Anspruch 1, **dadurch gekennzeichnet, dass** in der Steuereinheit der aktuell durchzuführende und zu kontrollierende Bearbeitungsschritt oder eine Bearbeitungsschrittsequenz ausgewählt wird, indem vor der Referenzierung in einem vorhergehenden Prozessschritt wenigstens ein codierter Marker am Werkstück direkt oder an einer Aufnahme des Werkstücks angebracht und automatisch von der Fotogrammetrieeinrichtung erfasst und ausgewertet wird, wobei die Auswertung vorzugsweise eine Identifizierung des Werkstücks beinhaltet, und auf der Basis der Auswertung der bzw. die Bearbeitungsschritte ausgewählt werden.

3. Verfahren nach Anspruch 1 oder 2, **dadurch gekennzeichnet, dass** die Vorrichtung im Rahmen der Referenzierung eine Initialisierung und anschließend eine Optimierung durchführt, wobei die Initialisierung und/oder die Optimierung ein Scannen wenigstens eines Teilbereichs der Oberfläche des Werkstücks beinhaltet, und wobei vorzugsweise im Rahmen der Referenzierung nur ein als verlässlich angesehener Teilbereich der Oberfläche des Werkstücks gescannt wird, wobei der Teilbereich vorzugsweise Referenzpunkte (RPS-Systematik) oder andere signifikante Merkmale des Werkstücks, die als besonders genau bekannt bzw. präzise gefertigt gelten, beinhaltet und mehr als einen zusammenhängenden Abschnitt der Oberfläche aufweisen kann.

4. Verfahren nach Anspruch 3, **dadurch gekennzeichnet, dass** das Projizieren einer für das Scannen im Rahmen einer dynamischen Referenzierung und/oder der kontinuierlichen Kontrolle der Bearbeitung benötigten Darstellung mit dem Projizieren der Arbeitseinweisung verschränkt wird.

5. Verfahren nach Anspruch 3 oder 4, **dadurch gekennzeichnet, dass** bei der Initialisierung und/oder Optimierung auf wenigstens eine der folgenden Arten von Messungen zurückgegriffen wird: mittels Bildverarbeitung automatisch oder semi-automatisch aus Aufnahmen der Fotogrammetrieeinrichtung extrahierte 2D-Textur- und/oder 2D-Kanten-Features, gegebenenfalls weiterverarbeitet zu 3D-Features; automatisch akquirierbare 3D-Punktewolke aus einer Tiefenkamera oder durch Scannen; automatisch oder semi-automatisch akquirierbare 2D-Features durch Erfassung von Markern auf einer Transport- oder Haltevorrichtung des Werkstücks oder auf dem Werkstück selbst, gegebenenfalls weiterverarbeitet zu 3D-Features; semi-automatisch akquirierbare 2D-Features durch Platzierung von Markern auf dem Werkstück und/oder durch Aufprojektion von Markierungen, wie etwa Fadenkreuzen, auf bestimmte Stellen des Werkstücks, gegebenenfalls weiterverarbeitet zu 3D-Features.

6. Verfahren nach einem der Ansprüche 3 bis 5, **dadurch gekennzeichnet, dass** eine mit dem Werkstück fest verbundene Transport- oder Haltevorrichtung zur Initialisierung verwendet wird, wobei Marker an der Transport- oder Haltevorrichtung angebracht und von der Fotogrammetrieeinrichtung erfasst werden und dadurch der für die Referenzierung benötigte Bezug vom Projektor zum Werkstück über den Bezug vom Projektor zur Transport- oder Haltevorrichtung und von der Transport- oder Haltevorrichtung zum Werkstück automatisch hergestellt wird.

7. Verfahren nach einem der Ansprüche 3 bis 6, **dadurch gekennzeichnet, dass** dem Werker nach der Initialisierung Anweisungen gegeben werden, wo am Werkstück (weitere) Marker zur Unterstützung der Optimierung zu platzieren sind.

8. Verfahren nach einem der Ansprüche 3 bis 7, **dadurch gekennzeichnet, dass** im Rahmen der Optimierung eine iterative Best-Fit-Strategie verfolgt wird, wobei aus den bekannten 3D-Positionen einer durch das Scannen ermittelten Punktwolke der Oberfläche des Werkstücks eine Pose der Punktwolke relativ zu einem der Steuereinheit zur Verfügung stehenden Computer-Modell des Werkstücks bestimmt wird.

9. Verfahren nach einem der Ansprüche 3 bis 8, **dadurch gekennzeichnet, dass** im Rahmen der Optimierung eine iterative Best-Fit-Strategie nach der Erfassung von vorgegebenen Passpunkten einer Referenzpunktsystematik und/oder nach einem flächig dichten Scannen oder Erfassen einer Vielzahl von 3D-Punkten auf der Oberfläche des Werkstücks verfolgt wird.

10. Verfahren nach einem der vorhergehenden Ansprüche, **dadurch gekennzeichnet, dass** dem Scannen die Platzierung und Erfassung von uncodierten Markern am Werkstück und/oder an einer auf einer Transport- oder Haltevorrichtung des Werkstücks vorausgeht, wobei mögliche Platzierungspositionen in einem Computer-Modell des Werkstücks oder der Transport- oder Haltevorrichtung des Werkstücks vorab ermittelt werden.

11. Verfahren nach einem der vorhergehenden Ansprüche, **dadurch gekennzeichnet, dass** für die Referenzierung eine Mehrzahl optischer Merkmale, insbesondere verschiedenartiger optischer Merkmale, mit verschiedenen Messtechniken erfasst werden, wobei vorzugsweise eine Vorabfilterung in der Verarbeitung der von der Fotogrammetrieeinrichtung erfassten Bilder vorgenommen wird.

12. Verfahren nach einem der vorhergehenden Ansprüche, **dadurch gekennzeichnet, dass** die Steuereinheit unter Verwendung der aus der Referenzierung, insbesondere bereits aus deren Initialisierung, bestimmten Pose des Projektors prüft, ob der Oberflächenbereich des Werkstücks, in dem die Bearbeitung durch den Werker stattfinden soll, unverdeckt im Projektionsbereich des Projektors liegt.

13. Verfahren nach einem der vorhergehenden Ansprüche, **dadurch gekennzeichnet, dass** nach der Referenzierung und vor der Projektion der Arbeitsanweisung der Oberflächenbereich des Werkstücks, in dem die Bearbeitung durch den Werker stattfinden soll, erneut gescannt wird, wobei vorzugsweise der Oberflächenbereich mit strukturiertem Licht oder einem Laserstrahl abgetastet, das reflektierte Licht von der Fotogrammetrieeinrichtung erfasst, mittels Triangulation aus den Messergebnissen eine dreidimensionale Ist-Punktwolke erstellt und ein Ist-Oberflächenmodell des Werkstücks im Bearbeitungsbereich berechnet wird, wobei vorzugsweise auf Basis des Ist-Oberflächenmodells durch Abgleich mit einem Soll-Zustand, insbesondere einem Computer-Modell, geprüft wird, ob der Bearbeitungsschritt bereits korrekt durchgeführt wurde.

14. Verfahren nach einem der vorhergehenden Ansprüche, **dadurch gekennzeichnet, dass** während der Projektion der Arbeitsanweisung durch Scannen geprüft wird, ob die Projektion der Arbeitsanweisung auf dem Oberflächenbereich des Werkstücks, in dem die Bearbeitung durch den Werker stattfinden soll, tatsächlich ankommt oder verdeckt ist, wobei auf eine Verdeckung geschlossen wird, wenn die erwarteten Lichtpunkte der Projektion an einer unerwarteten Stelle im aufgenommenen Bild der Fotogrammetrieeinrichtung erscheinen oder gar nicht auffindbar sind, und wobei vorzugsweise die Steuereinheit im Falle einer Verdeckung den Werker zu einer Umpositionierung des Projektors oder des Werkstücks auffordert.

15. Verfahren nach einem der vorhergehenden Ansprüche, **dadurch gekennzeichnet, dass** im Rahmen der Kontrolle der Bearbeitung gezielt der Oberflächenbereich des Werkstücks gescannt wird, in dem die Bearbeitung durch den Werker stattfinden sollte, und nur auf Basis der so erhaltenen dreidimensionalen Ist-Punktwolke ein Abgleich mit einem Soll-Zustand, insbesondere einem Computer-Modell, durchgeführt wird.

16. Verfahren nach einem der vorhergehenden Ansprüche, **dadurch gekennzeichnet, dass** die Kontrolle der Bearbeitung kontinuierlich, insbesondere auch vor einer Bestätigung der Beendigung der Bearbeitung durch den Werker, durchgeführt wird, wobei dabei vorzugsweise das Projizieren der Arbeitsanweisung mit dem Projizieren der für das Scanning benötigten Darstellung verschränkt wird, und/oder wobei dem Werker unmittelbar eine Rückmeldung bereits während der Bearbeitung in Abhängigkeit vom jeweiligen Ergebnis der kontinuierlich durchgeführten Kontrolle gegeben wird.

## Claims

1. A method of performing and monitoring a processing step on a workpiece using a device having a projector, a photogrammetric means and a control unit knowing the relative positions of the projector and the photogrammetric means, the method comprising the following steps:
- continuously repeatable referencing to determine the pose of the workpiece with respect to the projector and the photogrammetric means in a predetermined coordinate system;
- projection of a work instruction onto the workpiece;
- processing, by a worker, of the workpiece, in which the outer shape of the workpiece is changed, the processing step being related to the work instruction; and
- continuously performable monitoring of the processing by scanning at least a portion of the surface of the workpiece;
wherein all steps, with the exception of the processing by the worker, are performed by the device and at the same workstation within the framework of an integrated process.

2. The method according to claim 1, **characterized in that** the processing step to be currently performed and to be monitored or a processing step sequence is selected in the control unit **in that** in a preceding process step prior to referencing, at least one encoded marker is attached directly to the workpiece or to a fixture of the workpiece and is automatically sensed and evaluated by the photogrammetric means, the evaluation preferably including an identification of the workpiece, and the processing step(s) being selected on the basis of the evaluation.

3. The method according to claim 1 or 2, **characterized in that** within the framework of referencing, the device performs an initialization and then an optimization, the initialization and/or optimization including a scanning of at least a portion of the surface of the workpiece, and, preferably within the framework of referencing, only a portion of the surface of the workpiece considered to be reliable being scanned, the portion preferably containing reference points (RPS systematics) or other significant features of the workpiece which are considered to be particularly exactly known or precisely manufactured, and being adapted to include more than one continuous section of the surface.

4. The method according to claim 3, **characterized in that** the projecting of a representation required for the scanning within the framework of a dynamic referencing and/or of the continuous monitoring of the processing is interlaced with the projection of the work instruction.

5. The method according to claim 3 or 4, **characterized in that** during initialization and/or optimization, at least one of the following measurement types is used: 2D texture and/or 2D edge features extracted automatically or semi-automatically from records of the photogrammetric means by image processing, further processed to form 3D features, if required; 3D point cloud adapted to be automatically acquired from a depth camera or by scanning; 2D features that are adapted to be automatically or semi-automatically acquired by the detection of markers on a transport or support device of the workpiece or on the workpiece itself, further processed to form 3D features, if required; 2D features adapted to be semi-automatically acquired by placing markers on the workpiece and/or by projecting markings such as crosshairs onto specific places of the workpiece, further processed to form 3D features, if required.

6. The method according to any of claims 3 to 5, **characterized in that** a transport or support device firmly connected to the workpiece is used for initialization, markers being fixed to the transport or support device and being sensed by the photogrammetric means, the relationship between the projector and the workpiece required for referencing being thereby automatically established via the relationship between the projector and the transport or support device and the transport or support device and the workpiece.

7. The method according to any of claims 3 to 6, **characterized in that** after initialization, the worker receives instructions as to where (further) markers have to be placed on the workpiece to support the optimization.

8. The method according to any of claims 3 to 7, **characterized in that** within the framework of optimization, an iterative best-fit strategy is pursued, a pose of a point cloud with respect to a computer model of the workpiece available to the control unit being determined from the known 3D positions of the point cloud of the surface of the workpiece detected by scanning.

9. The method according to any of claims 3 to 8, **characterized in that** within the framework of optimization, an iterative best-fit strategy is pursued after the detection of predetermined control points of a reference point system and/or after an extensive scanning with high density or sensing of a plurality of 3D points on the surface of the workpiece.

10. The method according to any of the preceding claims, **characterized in that** the scanning is preceded by the placement and sensing of uncoded markers on the workpiece and/or on a transport or support device of the workpiece, possible placing positions being determined in advance in a computer model of the workpiece or of the transport or support device of the workpiece.

11. The method according to any of the preceding claims, **characterized in that** for referencing, a plurality of optical features, in particular of different optical features, is detected using different measuring techniques, a preliminary filtration being preferably carried out in the treatment of the images captured by the photogrammetric means.

12. The method according to any of the preceding claims, **characterized in that**, using the pose of the projector as determined from referencing, in particular already from the initialization thereof, the control unit checks whether the surface area of the workpiece in which the processing is to be performed by the worker is located uncovered in the projecting area of the projector.

13. The method according to any of the preceding claims, **characterized in that** after referencing and before the projection of the work instruction, the surface area of the workpiece in which the processing is to be performed by the worker is again scanned, the surface area being preferably sensed with structured light or a laser beam, the reflected light being detected by the photogrammetric means, a three-dimensional actual point cloud being established by triangulation from the measuring results, and an actual surface model of the workpiece in the processing area being calculated, a check being preferably carried out on the basis of the actual surface model by a comparison with a target state, in particular a computer model, as to whether the processing step has already been performed correctly.

14. The method according to any of the preceding claims, **characterized in that** during the projection of the work instruction, it is checked by scanning whether the projection of the work instruction actually arrives on the surface area of the workpiece in which the processing is to be carried out by the worker or whether it is masked, wherein a masking is assumed if the expected light points of the projection appear in an unexpected place in the recorded image of the photogrammetric means or are not locatable at all, and wherein the control unit preferably requests the worker to perform a repositioning of the projector or of the workpiece in case of a masking.

15. The method according to any of the preceding claims, **characterized in that** within the framework of the monitoring of the processing, the surface area of the workpiece in which the processing was to be carried out by the worker is purposefully scanned and **in that** a comparison with a target state, in particular a computer model, is performed only on the basis of the three-dimensional actual point cloud thus obtained.

16. The method according to any of the preceding claims, **characterized in that** the monitoring of the processing is performed continuously, in particular also before a confirmation of the end of the processing by the worker, the projecting of the work instruction being preferably interlaced with the projecting of the representation required for scanning, and/or a feedback being directly output to the worker already during processing depending on the respective result of the continuously performed monitoring.

## Revendications

1. Procédé de réalisation et de contrôle d'une étape de traitement sur une pièce d'œuvre en utilisant un dispositif présentant un projecteur, un moyen de photogrammétrie et une unité de commande qui connaît la position relative du projecteur et du moyen de photogrammétrie, le procédé comprenant les étapes suivantes :
- référencement continuellement répétable pour déterminer la pose de la pièce d'œuvre par rapport au projecteur et au moyen de photogrammétrie dans un système de coordonnées déterminé ;
- projection d'une instruction de travail sur la pièce d'oeuvre ;
- traitement, par un ouvrier, de la pièce d'œuvre, dans lequel la forme extérieure de la pièce d'œuvre est modifiée, l'étape de traitement étant en rapport avec l'instruction de travail ; et
- contrôle continuellement réalisable du traitement par scannage d'au moins une zone partielle de la surface de la pièce d'oeuvre ;
toutes les étapes étant réalisées au même poste de travail dans le cadre d'un processus intégré, et par le dispositif, à l'exception du traitement par l'ouvrier.

2. Procédé selon la revendication 1, **caractérisé en ce que** l'étape de traitement à réaliser et à contrôler actuellement ou une séquence d'étapes de traitement est choisie dans l'unité de commande **en ce qu'**au moins un marquage codé est placé directement sur la pièce d'œuvre ou sur un logement de la pièce d'œuvre et est automatiquement saisi et évalué par le moyen de photogrammétrie dans une étape de processus antérieure avant le référencement, l'évaluation comprenant de préférence une identification de la pièce d'œuvre, et l'étape ou les étapes de traitement étant choisie(s) sur la base de l'évaluation.

3. Procédé selon la revendication 1 ou 2, **caractérisé en ce que** le dispositif réalise une initialisation et ensuite une optimisation dans le cadre du référencement, l'initialisation et/ou l'optimisation comprenant un scannage d'au moins une zone partielle de la surface de la pièce d'œuvre, et seule une zone partielle de la surface de la pièce d'œuvre considérée comme fiable étant de préférence scannée dans le cadre du référencement, la zone partielle comprenant de préférence des points de référence (système RPS) ou d'autres signes caractéristiques de la pièce d'œuvre qui sont considérés comme connus de manière particulièrement exacte ou comme fabriqués de manière précise, et pouvant présenter plus d'un tronçon contigu de la surface.

4. Procédé selon la revendication 3, **caractérisé en ce que** la projection d'une représentation requise pour le scannage dans le cadre d'un référencement dynamique et/ou du contrôle continuel du traitement est entrelacée avec la projection de l'instruction de travail.

5. Procédé selon la revendication 3 ou 4, **caractérisé en ce que** lors de l'initialisation et/ou de l'optimisation, au moins l'un des types de mesures suivants est employé : caractéristiques de texture en 2D et/ou caractéristiques de bords en 2D automatiquement ou semi-automatiquement extraites de prises de vue du moyen de photogrammétrie par traitement d'images, transformées, le cas échéant, en caractéristiques en 3D ; nuages de points en 3D aptes à être acquis de manière automatique à partir d'une caméra de profondeur ou par scannage ; caractéristiques en 2D aptes à être acquises de manière automatique ou semi-automatique par saisie de marquages sur un dispositif de transport ou de retenue de la pièce d'œuvre ou sur la pièce d'œuvre même, transformées, le cas échéant, en caractéristiques en 3D ; caractéristiques en 2D aptes à être acquises de manière semi-automatique par placement de marquages sur la pièce d'œuvre et/ou par projection de marques telles que des réticules sur des endroits spécifiques de la pièce d'œuvre, le cas échéant transformées en caractéristiques en 3D.

6. Procédé selon l'une des revendications 3 à 5, **caractérisé en ce qu'**un dispositif de transport ou de retenue solidaire de la pièce d'œuvre est utilisé pour l'initialisation, des marquages étant agencés sur le dispositif de transport ou de retenue et étant saisis par le moyen de photogrammétrie, et le rapport entre le projecteur et la pièce d'œuvre requis pour le référencement étant ainsi automatiquement établi via le rapport entre le projecteur et le dispositif de transport ou de retenue, et entre le dispositif de transport ou de retenue et la pièce d'œuvre.

7. Procédé selon l'une des revendications 3 à 6, **caractérisé en ce qu'**après l'initialisation, l'ouvrier reçoit des instructions quant à l'endroit où placer des marquages (supplémentaires) sur la pièce d'œuvre en tant qu'aide à l'optimisation.

8. Procédé selon l'une des revendications 3 à 7, **caractérisé en ce que** dans le cadre de l'optimisation, une stratégie Best-Fit itérative est suivie, une pose d'un nuage de points par rapport à un modèle informatique de la pièce d'œuvre dont l'unité de commande dispose étant déterminée à partir des positions en 3D connues du nuage de points de la surface de la pièce d'œuvre déterminé par le scannage.

9. Procédé selon l'une des revendications 3 à 8, **caractérisé en ce que** dans le cadre de l'optimisation, une stratégie Best-Fit itérative est suivie après la saisie de points de soutien prédéterminés d'un système de points de référence et/ou après un scannage dense en surface ou la saisie d'une pluralité de points en 3D sur la surface de la pièce d'œuvre.

10. Procédé selon l'une des revendications précédentes, **caractérisé en ce que** le scannage est précédé du placement et de la saisie de marquages non codés sur la pièce d'œuvre et/ou sur un dispositif de transport ou de retenue de la pièce d'œuvre, des positions de placement possibles étant déterminées au préalable dans un modèle informatique de la pièce d'œuvre ou du dispositif de transport ou de retenue.

11. Procédé selon l'une des revendications précédentes, **caractérisé en ce qu'**une pluralité de signes distinctifs optiques, en particulier de différents signes distinctifs optiques est saisie pour le référencement en utilisant différentes techniques de mesure, une préfiltration étant de préférence réalisée dans le traitement des images saisies par le moyen de photogrammétrie.

12. Procédé selon l'une des revendications précédentes, **caractérisé en ce que** l'unité de commande, en utilisant la pose du projecteur telle que déterminée par le référencement, en particulier déjà par son initialisation, vérifie si la zone de surface de la pièce d'œuvre dans laquelle le traitement par l'ouvrier doit être effectué, se trouve non masquée dans la zone de projection du projecteur.

13. Procédé selon l'une des revendications précédentes, **caractérisé en ce qu'**après le référencement et avant la projection de l'instruction de travail, la zone de surface de la pièce d'œuvre dans laquelle le traitement par l'ouvrier doit être effectué, est de nouveau scannée, la zone de surface étant de préférence balayée par de la lumière structurée ou par un rayon laser, la lumière réfléchie étant détectée par le moyen de photogrammétrie, un nuage de points réel en trois dimensions étant établi par triangulation à partir des résultats de mesure, et un modèle de surface réel de la pièce d'œuvre dans la zone de traitement étant calculé, une vérification si l'étape de traitement a déjà été correctement effectuée étant de préférence réalisée sur la base du modèle de surface réel par comparaison avec un état désiré, en particulier un modèle informatique.

14. Procédé selon l'une des revendications précédentes, **caractérisé en ce que** pendant la projection de l'instruction de travail il est vérifié par scannage si la projection de l'instruction de travail arrive effectivement sur la zone de surface de la pièce d'œuvre dans laquelle le traitement par l'ouvrier doit être effectué, ou si elle est masquée, un masquage étant supposé lorsque les points de lumière attendus de la projection apparaissent à un endroit inattendu dans la prise de vue du moyen de photogrammétrie ou sont introuvables, et l'unité de commande demandant de préférence à l'ouvrier de repositionner le projecteur ou la pièce d'œuvre dans le cas d'un masquage.

15. Procédé selon l'une des revendications précédentes, **caractérisé en ce que** dans le cadre du contrôle du traitement, la zone de surface de la pièce d'œuvre dans laquelle le traitement par l'ouvrier devrait être effectué est scannée de manière ciblée, et **en ce qu'**une comparaison avec un état désiré, en particulier un modèle informatique, est réalisée uniquement sur la base du nuage de points réel en trois dimensions ainsi obtenu.

16. Procédé selon l'une des revendications précédentes, **caractérisé en ce que** le contrôle du traitement est réalisé de façon continue, en particulier aussi avant une confirmation de la fin du traitement par l'ouvrier, la projection de l'instruction de travail étant de préférence entrelacée avec la projection de la représentation requise pour le scannage, et/ou une information en retour étant directement fournie à l'ouvrier déjà pendant le traitement en fonction du résultat respectif du contrôle réalisé de façon continue.
